# FASCICULE DE BREVET EUROPEEN

(11) **EP 3 781 337 B1**
(45) Date de publication et mention de la délivrance du brevet: **08.01.2025**
(21) Numéro de dépôt: 19772781.1
(22) Date de dépôt: 17.04.2019
(51) Int. Cl.: B33Y 10/00, B33Y 50/02, B22F 5/00, B28B 7/00, B29C 33/00, B29D 30/06, B29L 31/00, B22F 10/28, B22F 10/366, B22F 3/105

(54) **PROCÉDÉ DE FABRICATION ADDITIVE D'UNE PIÈCE MÉTALLIQUE EN TROIS DIMENSIONS**
VERFAHREN ZUR GENERATIVEN FERITGUNG EINES DREIDIMENSIONALEN METALLTEILS
PROCESS FOR THE ADDITIVE MANUFACTURING OF A THREE-DIMENSIONAL METAL PART

(30) Priorité: 19.04.2018 FR 1853456
(43) Date de publication de la demande: 24.02.2021
(73) Titulaire: COMPAGNIE GENERALE DES ETABLISSEMENTS MICHELIN, 63000 Clermont-Ferrand (FR)
(72) Inventeur: PAYS, Pierre, 63040 CLERMONT FERRAND CEDEX 9 (FR)
(74) Mandataire: M.F.P. Michelin
(86) Numéro de dépôt international: PCT/FR2019/050919
(87) Numéro de publication internationale: WO 2019/202263

(56) Documents cités:
- EP-A1- 0 863 806
- EP-A1- 1 418 013
- EP-A1- 2 402 097
- EP-A1- 3 219 468
- EP-B1- 0 863 806
- EP-B1- 1 418 013
- WO-A1-2016/016136
- US-A1- 2005 142 024
- US-A1- 2007 035 069
- US-A1- 2014 348 692
- US-A1- 2016 282 848
- US-A1- 2017 282 244
- RUIDI LI ET AL: "316L Stainless Steel with Gradient Porosity Fabricated by Selective Laser Melting", JOURNAL OF MATERIALS ENGINEERING AND PERFORMANCE, vol. 19, no. 5, 11 September 2009 (2009-09-11), pages 666 - 671, XP055141597, ISSN: 1059-9495, DOI: 10.1007/s11665-009-9535-2

## Description

### DOMAINE TECHNIQUE GENERAL

L'invention se situe dans le domaine de la fabrication additive.

La présente invention concerne plus précisément un procédé de fabrication additive d'une pièce métallique en trois dimensions, présentant au moins une partie massive, telle qu'une lamelle de formation des sillons de la bande de roulement d'un pneumatique, destinée à être insérée dans un moule de cuisson dudit pneumatique.

### ETAT DE LA TECHNIQUE

La fabrication additive permet de fabriquer des pièces métalliques par la répétition d'un cycle comprenant une étape de dépôt d'une couche de poudre métallique, suivie d'une étape de fusion de cette couche par rayonnement électromagnétique, par exemple à l'aide d'un faisceau laser.

Ce type de procédé génère de fortes contraintes qui déforment les pièces ainsi fabriquées, du fait de gradients de température importants. Ces déformations sont encore plus importantes lorsque la pièce à fabriquer présente de fortes variations d'épaisseur. Ces déformations peuvent engendrer des déchirures.

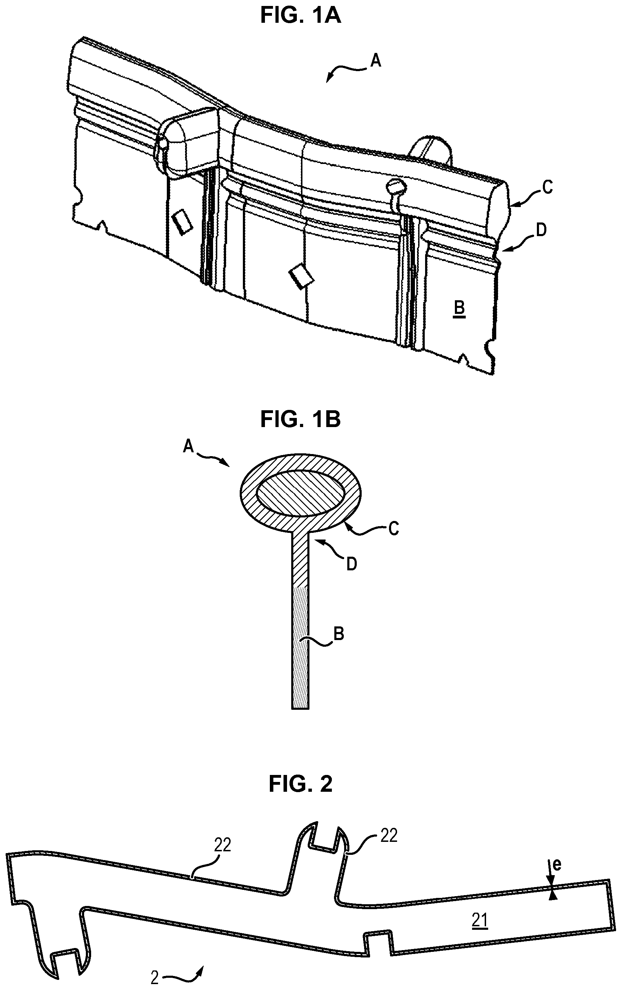

A titre d'exemple, on a représenté sur la figure 1A jointe, une vue en perspective d'un exemple de réalisation d'une lamelle telle que précitée et sur la figure 1B un schéma de la section transversale verticale de la lamelle de la figure 1A. Cette lamelle A, dite de type « en goutte d'eau », comprend deux parties, respectivement un corps B et une partie massive ou « goutte d'eau » C.. L'extrémité libre du corps B est destinée à être noyée dans la masse du moule de cuisson des pneumatiques, tandis que l'extrémité opposée du corps B et la goutte d'eau C font saillie depuis le fond de ce moule. Ainsi, lorsque le caoutchouc est moulé, une telle lamelle permet de réaliser dans la profondeur du pneumatique une cavité importante assez large correspondant à la partie C, cette cavité se prolongeant vers l'extérieur de la surface du pneu par une fine rainure correspondant à une portion de la languette du corps fin B. Une telle lamelle A permet ainsi la réalisation de sillons de forme particulière sur un pneumatique.

On comprend aisément qu'au niveau de la zone de transition D entre B et C, les contraintes générées par le procédé de fabrication additive risquent de conduire à la fragilisation de la lamelle A, voire même à sa rupture, ce qui peut être particulièrement gênant pendant le moulage d'un pneumatique. EP3219468 A1 concerne un procédé pour la fabrication de moule de pneu intégral formé par la fabrication additive de lit de poudre dans lequel les différentes parties du moule métallique présentent différentes propriétés et densités.Ce document divulgue que pour obtenir un objet ayant différentes densités les conditions d'irradiations peuvent être changées et que la densité peut être contrôlée par la distance de chevauchement.

### PRESENTATION DE L'INVENTION

L'invention a pour but de fournir un procédé de fabrication additive d'une pièce métallique en trois dimensions présentant au moins une partie massive, qui permette de réduire fortement les contraintes exercées sur cette pièce, les fissurations et les déformations, tout en garantissant une bonne résistance mécanique de la pièce dans son ensemble.

Par partie « massive », on entend dans la suite de la description et des revendications une partie pleine, présentant de préférence une section transversale d'une largeur supérieure à 2 mm.

L'invention a également pour but de fournir un procédé tel que précité qui puisse essentiellement s'appliquer à des pièces présentant de fortes variations d'épaisseur.

A cet effet, l'invention concerne un procédé de fabrication additive d'une pièce métallique en trois dimensions présentant au moins une partie massive et ayant une variation d'épaisseur, telle qu'une lamelle de formation des sillons de la bande de roulement d'un pneumatique destinée à être insérée dans un moule de cuisson dudit pneumatique, cette partie massive de la pièce métallique comprenant une partie intérieure, dite "noyau" entourée d'une partie extérieure dite "coque", ce procédé consistant à solidifier successivement par fusion à l'aide d'un faisceau laser, des couches de poudre métallique déposées successivement et à définir dans chacune de ces différentes couches successives de poudre, soit au moins une région de coque, qui constitue une portion de ladite coque de la pièce métallique à fabriquer, soit au moins une région de noyau entourée d'une région de coque, ladite région de noyau constituant une portion dudit noyau de la pièce métallique à fabriquer.

Conformément à l'invention, la fusion desdites régions de noyau est réalisée par balayage avec ledit faisceau laser, de façon à former des cordons de soudure longitudinaux de mêmes largeurs, parallèles entre-eux, et qui soit sont juxtaposés, soit sont écartés entre eux d'une distance inférieure à X % de leur largeur, soit se chevauchent sur une distance inférieure à X % de leur largeur et en ce que la fusion desdites régions de coque est réalisée par balayage avec ledit faisceau laser, de façon à former des cordons de soudure longitudinaux de mêmes largeurs et de même largeur que les cordons de soudure du noyau, parallèles entre eux et qui se chevauchent sur une distance supérieure à X % de leur largeur, X étant égal à 30.

Grâce à ces caractéristiques de l'invention, il est possible de réduire les contraintes mécaniques tout en garantissant une densité suffisante de la coque et du noyau. La pièce obtenue présente de bonnes propriétés mécaniques (résistance augmentée, absence de déchirures ou de zones d'amorce de rupture).

Selon d'autres caractéristiques avantageuses et non limitatives de l'invention, prises seules ou en combinaison :
- la fusion desdites régions de noyau est réalisée par balayage avec ledit faisceau laser, de façon à former des cordons de soudure voisins écartés entre eux d'une distance inférieure à 20%, de préférence inférieure à 10% de la largeur de ces cordons ;
- la fusion desdites régions de noyau est réalisée par balayage avec ledit faisceau laser, de façon à former des cordons de soudure qui se chevauchent sur une distance inférieure à 20%, de préférence inférieure à 10%, de la largeur de ces cordons de soudure ;
- la fusion desdites régions de coque est réalisée par balayage avec ledit faisceau laser de façon à former des cordons de soudure se chevauchant sur une distance supérieure à 30% et inférieure ou égale à 60%, de préférence supérieure ou égale à 40% et inférieure ou égale à 50% de la largeur de ces cordons ;
- le noyau et la coque se chevauchent sur une largeur comprise entre 0,01 mm et 0,40 mm, de préférence sur une largeur de 0,10 mm ;
- au moins une région de noyau d'une couche de poudre métallique comprend au moins deux zones et parmi ces zones, le balayage avec ledit faisceau laser d'au moins une zone donnée est réalisé de sorte que les vecteurs de déplacement dudit faisceau laser aient un angle d'orientation par rapport à un repère trigonométrique qui est différent de l'angle d'orientation des vecteurs de déplacement dudit faisceau laser dans une zone contiguë à ladite zone donnée ;
- au moins une région de coque d'une couche de poudre métallique comprend au moins deux zones et parmi ces zones, le balayage avec ledit faisceau laser d'au moins une zone donnée est réalisé de sorte que les vecteurs de déplacement dudit faisceau laser aient un angle d'orientation par rapport à un repère trigonométrique qui est différent de l'angle d'orientation des vecteurs de déplacement dudit faisceau laser dans une zone contiguë à ladite zone donnée ;
- lesdites zones sont carrées et disposées en damier, ce damier comprenant au moins deux lignes dites "paire" et "impaire" ;
- dans chaque région de noyau et/ou dans chaque région de coque, la fusion d'une couche de poudre métallique donnée est réalisée en balayant à l'aide dudit faisceau laser, les zones des lignes impaires et des colonnes impaires, dites "premières zones", selon un premier angle d'orientation, les zones des lignes impaires et des colonnes paires, dites "secondes zones", selon un deuxième angle d'orientation, les zones des lignes paires et des colonnes impaires, dites "troisièmes zones", selon un troisième angle d'orientation et les zones des lignes paires et des colonnes paires, dites "quatrièmes zones", selon un quatrième angle d'orientation, ces quatre angles d'orientation par rapport à un repère trigonométrique étant différents ;
- la pièce métallique comprend n couches successives superposées, en ce que les angles d'orientation des vecteurs de déplacement du faisceau laser respectivement des premières, deuxièmes, troisièmes et quatrièmes zones de la région de noyau d'une couche présentent une variation angulaire avec les angles d'orientation des vecteurs de déplacement du faisceau laser respectivement des premières, deuxièmes, troisièmes et quatrièmes zones de la région de noyau de la couche située au-dessus, les angles d'orientation des vecteurs de déplacement du faisceau laser respectivement des premières, deuxièmes, troisièmes et quatrièmes zones de la région de coque d'une couche présentent une variation angulaire avec les angles d'orientation des vecteurs de déplacement du faisceau laser respectivement des premières, deuxièmes, troisièmes et quatrièmes zones de la région de coque de la couche située au-dessus, et ces deux variations angulaires sont différentes ;
- le noyau de la pièce comprend n couches successives superposées et en ce que les zones carrées de noyau d'une couche sont décalées de 1 /q pas, q étant un nombre entier, de préférence égal à 2, latéralement et/ou longitudinalement par rapport aux zones carrées de noyau de la couche située immédiatement au-dessus ;
- la coque de la pièce comprend n couches successives superposées et en ce que les zones carrées de coque d'une couche sont décalées de 1 /q pas, q étant un nombre entier, de préférence égal à 2, latéralement et/ou longitudinalement par rapport aux zones carrées de coque de la couche située immédiatement au-dessus.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- la figure 1A est une vue en perspective d'un exemple de réalisation d'une lamelle de formation des sillons de la bande de roulement d'un pneumatique, destinée à être insérée dans un moule de cuisson dudit pneumatique,
- la figure 1B est un schéma d'une vue en coupe transversale d'une lamelle,
- la figure 2 est une vue en section longitudinale de la partie massive d'une lamelle de formation des sillons, cette dernière ayant été obtenue par le procédé conforme à l'invention,
- la figure 3 est une vue schématique représentant un exemple d'installation de fabrication additive permettant la mise en oeuvre du procédé de fabrication additive conforme à l'invention,
- la figure 4 est une vue schématique et de détail d'un empilement de couches successives de poudre métallique, couches sur lesquelles on a représenté différentes zones présentant des paramètres de fusion différents,
- la figure 5 est une vue schématique en section verticale d'une pièce métallique fabriquée par le procédé conforme à l'invention, dont la forme ne correspond pas à une lamelle mais qui explique le principe de l'invention,
- la figure 6 est une vue schématique éclatée représentant différentes couches de poudre métallique entrant dans la fabrication de la pièce de la figure 5,
- la figure 7 est une vue schématique d'une couche de poudre métallique du noyau dont une partie a été fusionnée sous forme de cordons de soudure,
- les figures 8 et 9 sont des schémas représentant deux variantes de réalisation de la fusion d'une couche de poudre du noyau d'une pièce métallique à fabriquer,
- la figure 10 est un schéma représentant la fusion d'une couche de poudre de la coque d'une pièce métallique à fabriquer, et
- les figures 11 et 12 sont des vues schématiques de dessus représentant un exemple d'orientation des vecteurs de balayage par le faisceau laser lors de la fusion de différentes zones de la région de coque et de la région de noyau de deux couches successives de poudre métallique.

### DESCRIPTION DETAILLEE DE L'INVENTION

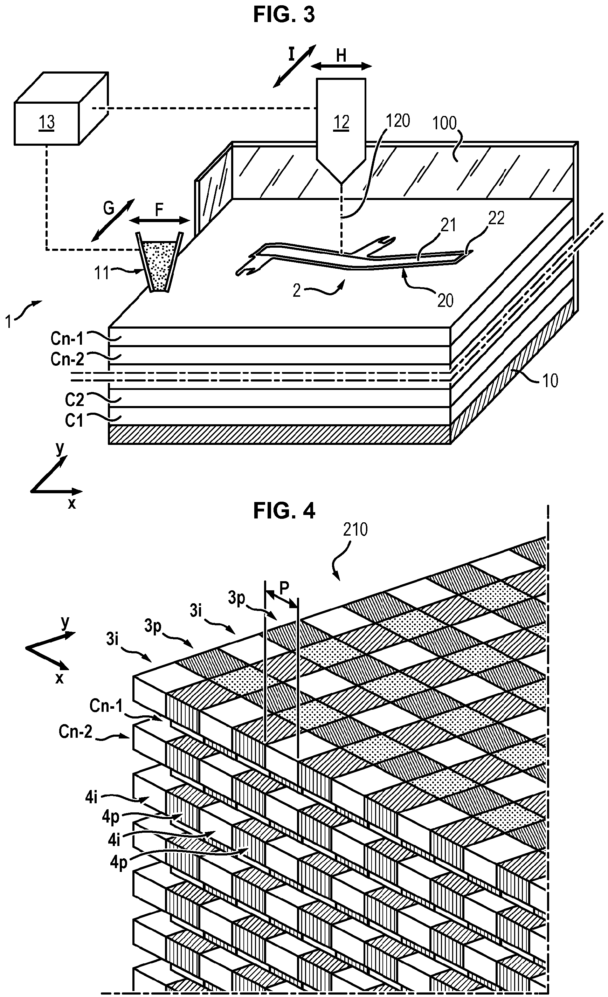

Un exemple de réalisation d'une installation de fabrication additive permettant la mise en oeuvre du procédé conforme à l'invention va maintenant être décrit en liaison avec la figure 3.

Cette installation 1 comprend un support 10, un dispositif 11 de distribution de poudre métallique et un laser 12.

Le dispositif de distribution 11 permet de déposer une première couche C1 de poudre métallique sur le support 10, cette couche étant retenue par les rebords 100 du support 10, représentés seulement partiellement sur la figure 3. Le dispositif 11 est piloté par une unité centrale 13, tel qu'un ordinateur, de façon à assurer son déplacement selon deux directions perpendiculaires x et y (c'est-à-dire dans le sens de la largeur, respectivement de la profondeur sur la figure 3) et ce, dans les deux sens pour chacune de ces directions (flèches F et G). D'autres dispositifs 11 peuvent se déplacer autrement, par exemple uniquement selon la direction x mais en distribuant la poudre sur toute la profondeur en un seul passage.

Une fois la première couche C1 déposée, le laser 12, piloté par l'unité centrale 13, est déplacé au-dessus de la couche de poudre C1, également selon les directions x et y et dans les deux sens pour chaque direction (flèches H et I), de façon à fusionner la couche de poudre métallique C1, mais uniquement à l'intérieur du contour 20 de la pièce 2 en trois dimensions à fabriquer.

Une fois cette étape réalisée, une deuxième couche de poudre métallique C2 est formée au-dessus de la première C1, à l'aide du dispositif de distribution 11, et de nouveau le laser 12 est actionné pour fusionner la poudre au niveau de l'aire de la pièce 2.

Le processus est ainsi répété jusqu'à déposer les n couches nécessaires à la fabrication du produit 2. Sur la figure 3, les couches Cn-1 et Cn-2 correspondent respectivement à l'avant-dernière et à l'avant-avant-dernière des n couches déposées.

Les paramètres du laser 12, tels que sa puissance, sa vitesse de déplacement et sa distance focale sont adaptés en fonction de la nature de la poudre métallique à fusionner.

La pièce 2 à fabriquer est modélisée en trois dimensions, de façon à définir une région intérieure 21, dite «de noyau », entourée d'une région extérieure 22, dite « de coque », qui constitue une sorte de « peau » superficielle recouvrant l'intégralité de la pièce 2.

Les techniques de modélisation en 3D sont connues de l'homme du métier et ne seront pas ici décrites en détail.

Un exemple de pièce 2 en coupe (ici une lamelle telle que précitée), présentant une région de noyau 21 et une région de coque 22, est représenté sur la figure 2.

La coque 22 présente de préférence une épaisseur e comprise entre 0,1 mm et 4 mm, de préférence encore égale à 0,4 mm

On notera toutefois que pour des raisons liées à des problèmes de résistance mécanique ou d'utilisation de certains logiciels de modélisation en 3D, certaines excroissances de la pièce 2 peuvent être modélisées comme des régions de coque 22 et seront alors d'une épaisseur supérieure à 4 mm.

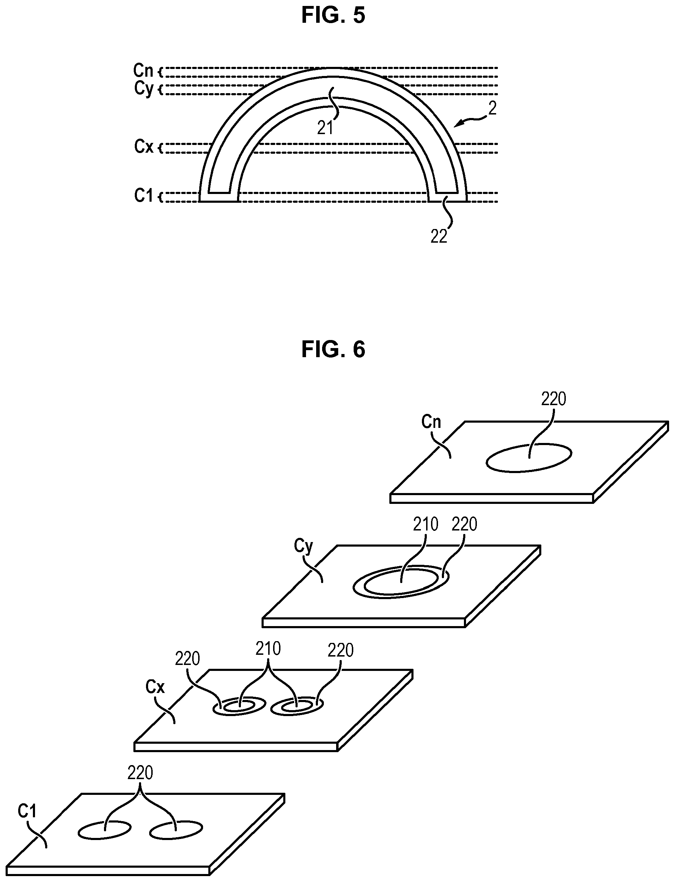

Afin de comprendre le procédé conforme à l'invention, on va maintenant se reporter aux figures 5 et 6.

Sur la figure 5, on peut voir une vue en coupe transversale verticale d'une pièce métallique 2 en trois dimensions, obtenue par fabrication additive. Cette pièce a ici schématiquement une forme arquée.

On a représenté sur la gauche de la figure 5, quelque unes des n couches de poudre qui ont permis la réalisation de cette pièce. Ces n couches sont référencées C1, Cx, Cy et Cn, x, y et n correspondant aux numéros des couches et x et y étant compris entre 1 et n.

Ces différentes couches C1 à Cn sont ensuite représentées sur la vue éclatée de la figure 6. On constate que pour chaque couche de poudre C1, Cx, Cy et Cn, on définit soit au moins une région de coque, soit au moins une région de noyau entourée d'une région de coque.

La première couche de poudre C1 comprend deux régions 220 de coque, tandis que la dernière couche Cn n'en comprend qu'une seule, compte-tenu de la forme de la pièce 2.

Au niveau de la couche intermédiaire Cx, on retrouve deux régions de noyau 210, entourées chacune par une région de coque 220, tandis que sur la couche Cy, on observe une seule région de noyau 210, entourée d'une seule région de coque 220. L'ensemble des régions de coque 220 définit la coque 22 de la pièce 2. De même, l'ensemble des régions de noyau 210 définit le noyau 210 de la pièce 2.

Comme décrit ci-dessous, les paramètres de déplacement du faisceau laser sont différents, suivant qu'il s'agit de fusionner le noyau 21 ou bien la coque 22 de la pièce 2.

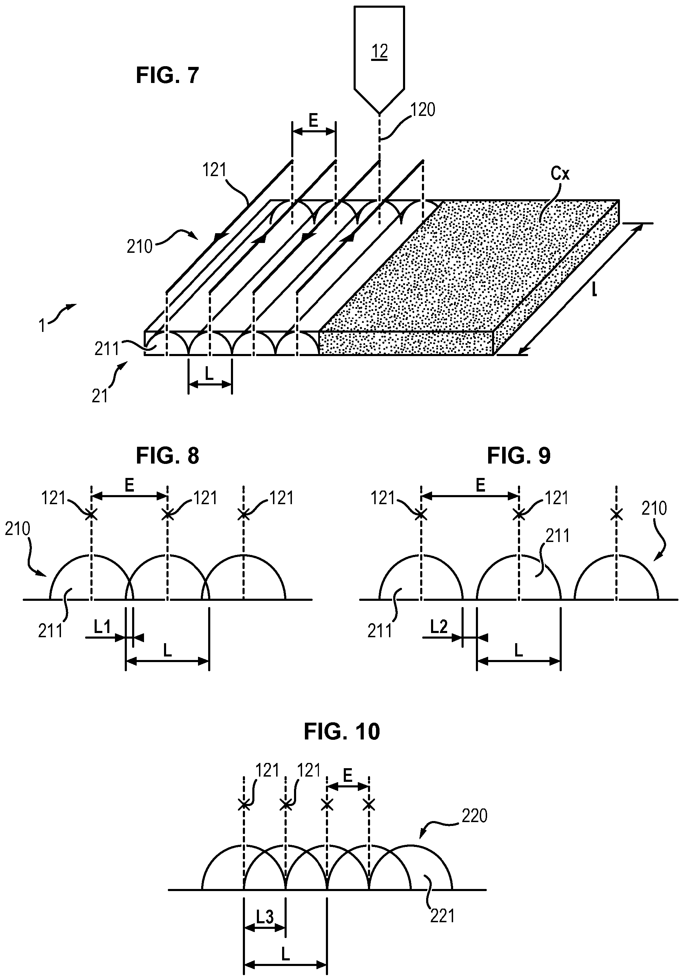

En se reportant à la figure 7, on peut voir que la fusion d'une région d'une couche Cx de poudre métallique est réalisée par un balayage à l'aide du faisceau 120 du laser 12, au-dessus de cette couche Cx, de façon à former des cordons de soudure parallèles. Sur cette figure qui représente une région de noyau 21, les cordons de soudure sont référencés 211.

Le laser 12 est déplacé de façon que son faisceau 120 suive des vecteurs de déplacement 121 parallèles entre eux, ces vecteurs étant espacés entre eux d'un écartement E.

De préférence, le laser 12 est déplacé selon une trajectoire aller-retour et d'un côté à l'autre de la couche à traiter, par exemple ici de la gauche vers la droite sur la figure.

Conformément à l'invention, la formation de ces cordons de soudure est faite de façon différente dans la région de coque et dans la région de noyau.

Conformément à l'invention, la fusion de chaque région 210 de noyau 21 est réalisée par balayage à l'aide du faisceau laser 120, selon les vecteurs de déplacement 121, de façon à former des cordons de soudure longitudinaux 211, parallèles entre eux et de mêmes largeurs L (la largeur L étant parallèle à l'écartement E entre deux vecteurs de déplacement du faisceau et perpendiculaire aux vecteurs 121).

En outre, cette fusion est réalisée de façon que les cordons de soudure 211 formés soient juxtaposés, comme représenté sur la figure 7, (et dans ce cas l'écartement E est égal à la largeur L), et les cordons se touchent ou bien de façon que les cordons de soudure 211 se chevauchent partiellement sur une distance L1 inférieure à X% de la largeur L du cordon 211, comme représenté sur la figure 8, (et dans ce cas l'écartement E est inférieur à la largeur L) ou bien encore de façon que les cordons de soudure 211 soient écartés entre eux d'une distance L2 inférieure à X% de la largeur L du cordon 211, comme représenté sur la figue 9 (et dans ce cas l'écartement E est supérieur à la largeur L). X est supérieur à 0 et inférieur à 100. X est égal à 30.

De préférence encore, deux cordons de soudure contigus 211 de noyau se chevauchent sur une distance L1 inférieure à 20%, voire même inférieure à 10% de la largeur L de ces cordons de soudure 211.

De préférence encore, deux cordons de soudure contigus voisins 211 de noyau sont écartés entre eux d'une distance L2 inférieure à 20%, voire même inférieure à 10% de la largeur L de ces cordons 211.

Conformément à l'invention, la fusion de chaque région 220 de coque est réalisée par balayage avec le faisceau laser 120, selon les vecteurs de déplacement 121, de façon à former des cordons de soudure longitudinaux 221, parallèles entre eux et de mêmes largeurs L les uns et les autres (L étant parallèle à l'écartement E et perpendiculaire aux vecteurs 121). En outre, les cordons de soudure 221 de coque sont de la même largeur que les cordons de soudure 211 de noyau.

En outre, cette fusion est réalisée de façon que les cordons de soudure 221 se chevauchent, comme représenté sur la figure 10 sur une distance L3 supérieure à X% de la largeur L du cordon 221, comme représenté sur la figure 10 (et dans ce cas l'écartement E est inférieur à la largeur L).

De préférence encore, deux cordons de soudure contigus 221 de coque se chevauchent sur une distance L3 supérieure à 30% et inférieure ou égale à 60% de la largeur L du cordon 221, ou mieux encore sur une distance L3 supérieure ou égale à 40% et inférieure ou égale à 50% de la largeur L.

Ainsi, en utilisant des paramètres de chevauchement différents entre les régions de coque et de noyau et notamment de chevauchement plus important dans les régions de coque que dans les régions de noyau, on réduit les contraintes à l'intérieur de la pièce 2 ainsi fabriquée, tout en garantissant une densité suffisante à la fois de la coque et du noyau et en obtenant une pièce présentant de bonnes propriétés de résistance mécanique.

On obtient ainsi une coque 22 avec une densité supérieure à 99% et un noyau avec une densité comprise entre 95% et 99%.

Une méthode pour déterminer la densité de la coque ou du noyau ainsi obtenu peut être la suivante. Cette méthode consiste à découper la coque ou le noyau en différentes sections, par exemple une dizaine de sections dans des plans perpendiculaires au cordon de soudure. Ensuite, chaque face des sections formées par la découpe est polie, par exemple à l'aide d'un disque abrasif. Cette étape de polissage permet de réduire la rugosité de surface de la face, ce qui permet de rendre plus visible les parties poreuses débouchant sur cette face. On vient ensuite photographier la face et cette photographie est traitée à l'aide d'un logiciel de traitement d'images. Le logiciel permet d'obtenir une photo traitée, sur laquelle apparaissent des zones sombres correspondant à des parties poreuses et des zones claires correspondant à des parties non poreuses, c'est-à-dire des parties polies. Le rapport entre l'aire des zones claires à l'aire totale de la face permet ainsi de déterminer la densité de la face de cette section. En répétant ces opérations de polissage, de photographie et de traitement d'images pour différentes sections et en effectuant une moyenne des résultats obtenus, il est ainsi possible de déterminer la densité globale de la pièce obtenue.

En fonction de la forme de la pièce 2, il est possible d'avoir plusieurs régions de noyau 210 massives, supérieures à 2mm de large, non jointives, voir par exemple la couche Cx sur la figure 6.

De préférence, une région de noyau 210 et une région de coque 220 se recouvrent (se chevauchent) sur une largeur comprise entre 0.01 mm et 0.40 mm, de préférence égale à 0,10 mm sur une même couche, afin de garantir une bonne liaison entre les deux régions. Dans ce cas, la zone de recouvrement coque/noyau sera fusionnée deux fois avec les deux modes précités de recouvrement des vecteurs selon la coque et selon le noyau.

Un autre paramètre de la fusion sur lequel il est possible d'agir dans le procédé conforme à l'invention concerne l'orientation des vecteurs 121 de déplacement du faisceau laser 120.

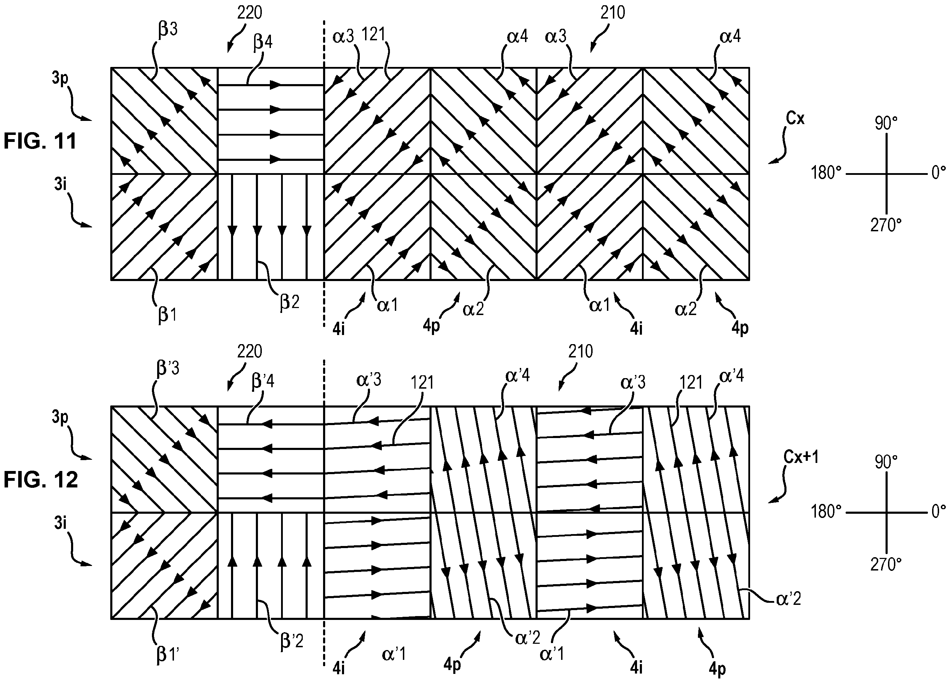

Ainsi, comme représenté sur la figure 11, il est possible, tout en conservant les paramètres de chevauchement ou d'espacement précités pour les différentes régions de noyau 210 ou de coque 220, de définir dans une couche donnée Cx et à l'intérieur d'une région de noyau, (respectivement d'une région de coque), au moins deux zones dans lesquelles le balayage avec le faisceau laser120 est réalisé selon deux angles d'orientation différents, par rapport à un repère trigonométrique.

De préférence, et comme représenté sur la figure 11, les différentes zones se présentent sous la forme d'un damier à au moins deux lignes et au moins deux colonnes de plusieurs zones carrées.

Les lignes impaires portent la référence 3i et les lignes paires la référence 3p, les colonnes impaires la référence 4i et les colonnes paires la référence 4p.

Les zones pourraient également être hexagonales par exemple.

Dans l'exemple représenté sur la figure 11, et dans la région de noyau 210, les vecteurs de déplacement 121 du faisceau laser 120 des zones (3i-4i) situées à l'intersection des colonnes impaires 4i et des lignes impaires 3i et dénommées ci-après "premières zones" sont orientés selon un premier angle d'orientation α1, ceux des zones (3i- 4p) situées à l'intersection des colonnes paires 4p et des lignes impaires 3i, dénommées ci-après "deuxièmes zones", selon un deuxième angle d'orientation α2, ceux des zones (3p-4i) situées à l'intersection des colonnes impaires 4i et des lignes paires 3p, dénommées ci-après "troisièmes zones", selon un troisième angle d'orientation α3 et ceux des zones (3p-4p), dénommées ci-après "quatrièmes zones", situées à l'intersection des colonnes paires 4p et des lignes paires 3p selon un quatrième angle orientation α4. Il pourrait également y avoir plus de quatre angles d'orientation différents sur le damier.

Il en est de même dans la région de coque 220 avec des premiers, deuxièmes, troisièmes et quatrièmes angles d'orientation β1, β2, β3 et β4.

Toujours selon ce même exemple, dans la région de noyau 210, α1 est orienté à 45°, α2 à 315°, α3 à 225° et α4 à 135°. Ces angles d'orientations pourraient être différents. On voit que par exemple pour α1 (45°) et α3 (225°) que les orientations angulaires sont les mêmes mais que les angles d'orientation du faisceau laser sont opposés du point de vue d'un repère trigonométrique. Dans l'exemple de la figure 11, les angles β1, β2, β3 et B4 sont quant à eux égaux respectivement à 45°, 270°, 135° et 0°.

De préférence, l'angle d'orientation α1 des premières zones 3i-4i de la région de noyau 210 d'une couche Cx (voir figure 11) présente une variation angulaire (dite "de noyau") avec l'angle d'orientation α'1 des premières zones 3i-4i de la région de noyau 210 de la couche Cx+1 située au-dessus (voir figure 12). Il en est de même respectivement pour les différents angles de deux couches successives. Dans l'exemple de la figure 12, les angles α'1, α'2, α'3 et α'4 sont respectivement égaux à 10°, 280°, 190° et 100°. Il existe donc une variation angulaire de 35 degrés entre α1 et α'1, respectivement entre α2 et α'2, α3 et α'3, α4 et α'4.

De même, de préférence, l'angle d'orientation β1 des premières zones 3i-4i de la région de coque 220 d'une couche Cx (voir figure 11) présente une variation angulaire (dite "de coque") avec l'angle d'orientation B'1 des premières zones 3i-4i de la région de coque 220 de la couche Cx+1 située au-dessus (voir figure 12). Il en est de même respectivement pour les différents angles de deux couches successives. Dans l'exemple de la figure 12, les angles β'1, β'2, β'3 et β'4 sont respectivement égaux à 225°, 90°, 315° et 180°. Il existe donc une variation angulaire de 180 degrés entre β1 et β'1, respectivement entre β2 et β'2, β3 et β'3, B4 et B'4.

La variation angulaire de noyau pourrait être identique à la variation angulaire de coque, toutefois, elle est de préférence différente.

En outre, et comme représenté sur la figure 4, il est également possible d'avoir un décalage entre les zones de deux couches successives, par exemple les couches Cn-1 et Cn-2, de 1/q pas P, par exemple sur cette figure d'un demi-pas (q=2 ) selon une direction x et/ou selon une direction y.

Dans l'exemple représenté, les zones 3i-4i, 3i-4p, 3p-4i, 3p-4p de la couche Cn-2 d'une région de noyau 210 sont ainsi décalées d'un demi pas P latéralement (direction x) et longitudinalement (direction y) par rapport aux zones 3i-4i, 3i-4p, 3p-4i, 3p-4p de la couche Cn-1 située immédiatement au-dessus. Il pourrait en être de même dans une région de coque 220.

## Revendications

1. Procédé de fabrication additive d'une pièce métallique (2) en trois dimensions d'une lamelle de formation des sillons de la bande roulement d'un pneumatique, destinée à être insérée dans le moule de cuisson dudit pneumatique, présentant au moins une partie massive et présentant de fortes variations d'épaisseur, comprenant une partie intérieure (21), dite "noyau entouré d'une partie extérieure (22) dite "coque", ce procédé consistant à solidifier successivement par fusion à l'aide d'un faisceau laser (120), des couches de poudre métallique (C1, C2, Cx, Cy,Cn) déposées successivement et à définir dans chacune de ces différentes couches successives de poudre, soit au moins une région de coque (220), qui constitue une portion de ladite coque (22) de la pièce métallique à fabriquer, soit au moins une région de noyau (210), entourée d'une région de coque (220), ladite région de noyau (210) constituant une portion dudit noyau (21) de la pièce métallique à fabriquer, **caractérisé en ce que** la fusion desdites régions de noyau (210) est réalisée par balayage avec ledit faisceau laser (120), de façon à former des cordons de soudure longitudinaux (211) de mêmes largeurs (L), parallèles entre eux, et qui soit sont juxtaposés, soit sont écartés entre eux d'une distance (L2) inférieure à X % de leur largeur (L), soit se chevauchent sur une distance (L1) inférieure à X % de leur largeur (L) et **en ce que** la fusion desdites régions de coque (220) est réalisée par balayage avec ledit faisceau laser (120), de façon à former des cordons de soudure longitudinaux (221) de mêmes largeurs (L) et de même largeur que les cordons de soudure (211) du noyau, parallèles entre eux et qui se chevauchent sur une distance (L3) supérieure à X % de leur largeur (L), X étant égal à 30.

2. Procédé selon la revendication 1, **caractérisé en ce que** la fusion desdites régions de noyau (210) est réalisée par balayage avec ledit faisceau laser (120), de façon à former des cordons de soudure (211) voisins écartés entre eux d'une distance (L2) inférieure à 20%, de préférence inférieure à 10% de la largeur (L) de ces cordons .

3. Procédé selon la revendication 1, **caractérisé en ce que** la fusion desdites régions de noyau (210) est réalisée par balayage avec ledit faisceau laser (120), de façon à former des cordons de soudure (211) qui se chevauchent sur une distance (L1) inférieure à 20%, de préférence inférieure à 10%, de la largeur (L) de ces cordons de soudure (211).

4. Procédé selon l'une des revendications 1 à 3, **caractérisé en ce que** la fusion desdites régions de coque (220) est réalisée par balayage avec ledit faisceau laser (120), de façon à former des cordons de soudure (221) se chevauchant sur une distance (L3) supérieure à 30% et inférieure ou égale à 60%, de préférence supérieure ou égale à 40% et inférieure ou égale à 50% de la largeur (L) de ces cordons (221).

5. Procédé selon l'une des revendications précédentes, **caractérisé en ce que** le noyau (21) et la coque (22) se chevauchent sur une largeur comprise entre 0,01 mm et 0,40 mm, de préférence sur une largeur de 0,10 mm.

6. Procédé selon l'une des revendications précédentes, **caractérisé en ce qu'**au moins une région de noyau (210) d'une couche de poudre métallique (C1, C2, Cx, Cy, Cn) comprend au moins deux zones (3i-4i, 3i-4p, 3p-4i, 3p-4p) et **en ce que** parmi ces zones, le balayage avec ledit faisceau laser (120) d'au moins une zone donnée est réalisé de sorte que les vecteurs de déplacement (121) dudit faisceau laser (120) aient un angle d'orientation par rapport à un repère trigonométrique qui est différent de l'angle d'orientation des vecteurs de déplacement (121) dudit faisceau laser (120) dans une zone contiguë à ladite zone donnée.

7. Procédé selon l'une des revendications précédentes, **caractérisé en ce qu'**au moins une région de coque (220) d'une couche de poudre métallique (C1, C2, Cx, Cy, Cn) comprend au moins deux zones (3i-4i, 3i-4p, 3p-4i, 3p-4p) et **en ce que** parmi ces zones, le balayage avec ledit faisceau laser (120) d'au moins une zone donnée est réalisé de sorte que les vecteurs de déplacement (121) dudit faisceau laser (120) aient un angle d'orientation par rapport à un repère trigonométrique qui est différent de l'angle d'orientation des vecteurs de déplacement (121) dudit faisceau laser (120) dans une zone contiguë à ladite zone donnée.

8. Procédé selon la revendication 6 ou 7, **caractérisé en ce que** lesdites zones (3i-4i, 3i-4p, 3p-4i, 3p-4p) sont carrées et disposées en damier, ce damier comprenant au moins deux lignes dites "paire" et "impaire".

9. Procédé selon la revendication 8, **caractérisé en ce que** dans chaque région de noyau (210) et/ou dans chaque région de coque (220), la fusion d'une couche de poudre métallique (C1, C2, Cx, Cy, Cn) donnée est réalisée en balayant à l'aide dudit faisceau laser (120), les zones (3i, 4i) des lignes impaires et des colonnes impaires, dites "premières zones", selon un premier angle d'orientation (α1, α'1, β1, β'1), les zones (3i, 4p) des lignes impaires et des colonnes paires, dites "secondes zones", selon un deuxième angle d'orientation (α2, α'2, β2, β'2), les zones (3p-4i) des lignes paires et des colonnes impaires, dites "troisièmes zones", selon un troisième angle d'orientation (α3, α'3, β3, β'3) et les zones (3p-4p) des lignes paires et des colonnes paires, dites "quatrièmes zones", selon un quatrième angle d'orientation (α4, α'4, β4, β'4), ces quatre angles d'orientation par rapport à un repère trigonométrique étant différents.

10. Procédé selon la revendication 9, **caractérisé en ce que** la pièce métallique (2) comprend n couches successives superposées (C1, C2, Cx, Cx+1, Cy, Cn), **en ce que** les angles d'orientation (α1, α2, α3, α4) des vecteurs de déplacement du faisceau laser (120) respectivement des premières, deuxièmes, troisièmes et quatrièmes zones de la région de noyau (210) d'une couche (Cx) présentent une variation angulaire avec les angles d'orientation (α'1, α'2, α'3, α'4) des vecteurs de déplacement du faisceau laser respectivement des premières, deuxièmes, troisièmes et quatrièmes zones de la région de noyau (210) de la couche (Cx+1) située au-dessus, **en ce que** les angles d'orientation (β1,β2, β3, β4) des vecteurs de déplacement du faisceau laser respectivement des premières, deuxièmes, troisièmes et quatrièmes zones de la région de coque (220) d'une couche (Cx) présentent une variation angulaire avec les angles d'orientation (β'1,β'2, β'3, β'4) des vecteurs de déplacement du faisceau laser respectivement des premières, deuxièmes, troisièmes et quatrièmes zones de la région de coque (220) de la couche (Cx+1) située au-dessus, et **en ce que** ces deux variations angulaires sont différentes.

11. Procédé selon l'une des revendications 8 à 10, **caractérisé en ce que** le noyau (21) de la pièce (2) comprend n couches successives superposées (C1, C2, Cx, Cy, Cn) et **en ce que** les zones carrées de noyau d'une couche sont décalées de 1/q pas (P), q étant un nombre entier, de préférence égal à 2, latéralement et/ou longitudinalement par rapport aux zones carrées de noyau de la couche située immédiatement au-dessus.

12. Procédé selon l'une des revendications 8 à 11, **caractérisé en ce que** la coque (22) de la pièce (2) comprend n couches successives superposées (C1, C2, Cx, Cy, Cn) et **en ce que** les zones carrées de coque d'une couche sont décalées de 1/q pas (P), q étant un nombre entier, de préférence égal à 2, latéralement et/ou longitudinalement par rapport aux zones carrées de coque de la couche située immédiatement au-dessus.

## Patentansprüche

1. Verfahren zur generativen Fertigung eines dreidimensionalen Metallteils (2) einer Lamelle zur Bildung der Rillen des Laufstreifens eines Reifens, die dazu bestimmt ist, in die Vulkanisierungsform des Reifens eingefügt zu werden, das mindestens einen massiven Teil aufweist und starke Dickenänderungen aufweist und einen Innenteil (21),
als "Kern" bezeichnet, beinhaltet, der von einem Außenteil (22), als "Hülle" bezeichnet, umgeben ist, wobei dieses Verfahren darin besteht, nacheinander aufgebrachte Metallpulverschichten (C1, C2, Cx, Cy, Cn) durch Schmelzen mit Hilfe eines Laserstrahls (120) nacheinander zu verfestigen und in jeder dieser unterschiedlichen aufeinanderfolgenden Pulverschichten entweder mindestens einen Hüllenbereich (220), der einen Abschnitt der Hülle (22) des zu fertigenden Metallteils bildet, oder mindestens einen Kernbereich (210), der von einem Hüllenbereich (220) umgeben ist, zu definieren, wobei der Kernbereich (210) einen Abschnitt des Kerns (21) des zu fertigenden Metallteils bildet, **dadurch gekennzeichnet, dass** das Schmelzen der Kernbereiche (210) durch das Überstreichen mit dem Laserstrahl (120) durchgeführt wird, um Längsschweißraupen (211) mit gleichen Breiten (L) zu bilden, die untereinander parallel sind und die entweder aneinander angrenzen oder um einen Abstand (L2), der kleiner als X % ihrer Breite (L) ist, voneinander beabstandet sind oder sich über einen Abstand (L1), der kleiner als X % ihrer Breite (L) ist, überlappen, und dass das Schmelzen der Hüllenbereiche (220) durch das Überstreichen mit dem Laserstrahl (120) durchgeführt wird, um Längsschweißraupen (221) mit gleichen Breiten (L) und mit gleicher Breite wie die Schweißraupen (211) des Kerns zu bilden, die untereinander parallel sind und die sich über einen Abstand (L3), der größer als X % ihrer Breite ist (L), überlappen, wobei X gleich 30 ist.

2. Verfahren nach Anspruch 1, **dadurch gekennzeichnet, dass** das Schmelzen der Kernbereiche (210) durch das Überstreichen mit dem Laserstrahl (120) durchgeführt wird, um benachbarte Schweißraupen (211) zu bilden, die um einen Abstand (L2), der kleiner als 20 %, vorzugsweise kleiner als 10 %, der Breite (L) dieser Raupen ist, voneinander beabstandet sind.

3. Verfahren nach Anspruch 1, **dadurch gekennzeichnet, dass** das Schmelzen der Kernbereiche (210) durch das Überstreichen mit dem Laserstrahl (120) durchgeführt wird, um Schweißraupen (211) zu bilden, die sich über einen Abstand (L1), der kleiner als 20 %, vorzugsweise kleiner als 10 %, der Breite (L) dieser Schweißraupen (211) ist, überlappen.

4. Verfahren nach einem der Ansprüche 1 bis 3, **dadurch gekennzeichnet, dass** das Schmelzen der Hüllenbereiche (220) durch das Überstreichen mit dem Laserstrahl (120) durchgeführt wird, um Schweißraupen (221) zu bilden, die sich über einen Abstand (L3), der größer als 30 % und kleiner als oder gleich 60 %, vorzugsweise größer als oder gleich 40 % und kleiner als oder gleich 50 %, der Breite (L) dieser Raupen (221) ist, überlappen.

5. Verfahren nach einem der vorhergehenden Ansprüche, **dadurch gekennzeichnet, dass** sich der Kern (21) und die Hülle (22) über eine Breite zwischen 0,01 mm und 0,40 mm, vorzugsweise über eine Breite von 0,10 mm, überlappen.

6. Verfahren nach einem der vorhergehenden Ansprüche, **dadurch gekennzeichnet, dass** mindestens ein Kernbereich (210) einer Metallpulverschicht (C1, C2, Cx, Cy, Cn) mindestens zwei Zonen (3i-4i, 3i-4p, 3p-4i, 3p-4p) beinhaltet und dass unter diesen Zonen das Überstreichen mit dem Laserstrahl (120) mindestens einer gegebenen Zone so durchgeführt wird, dass die Bewegungsvektoren (121) des Laserstrahls (120) einen Orientierungswinkel in Bezug auf ein trigonometrisches Bezugssystem aufweisen, der sich von dem Orientierungswinkel der Bewegungsvektoren (121) des Laserstrahls (120) in einer an die gegebene Zone angrenzenden Zone unterscheidet.

7. Verfahren nach einem der vorhergehenden Ansprüche, **dadurch gekennzeichnet, dass** mindestens ein Hüllenbereich (220) einer Metallpulverschicht (C1, C2, Cx, Cy, Cn) mindestens zwei Zonen (3i-4i, 3i-4p, 3p-4i, 3p-4p) beinhaltet und dass unter diesen Zonen das Überstreichen mit dem Laserstrahl (120) mindestens einer gegebenen Zone so durchgeführt wird, dass die Bewegungsvektoren (121) des Laserstrahls (120) einen Orientierungswinkel in Bezug auf ein trigonometrisches Bezugssystem aufweisen, der sich von dem Orientierungswinkel der Bewegungsvektoren (121) des Laserstrahls (120) in einer an die gegebene Zone angrenzenden Zone unterscheidet.

8. Verfahren nach Anspruch 6 oder 7, **dadurch gekennzeichnet, dass** die Zonen (3i-4i, 3i-4p, 3p-4i, 3p-4p) quadratisch sind und in einem Schachbrettmuster angeordnet sind, wobei dieses Schachbrettmuster mindestens zwei Zeilen beinhaltet, die als "gerade" und "ungerade" bezeichnet werden.

9. Verfahren nach Anspruch 8, **dadurch gekennzeichnet, dass** in jedem Kernbereich (210) und/oder in jedem Hüllenbereich (220) das Schmelzen einer gegebenen Metallpulverschicht (C1, C2, Cx, Cy, Cn) durchgeführt wird, indem mit Hilfe des Laserstrahls (120) die Zonen (3i, 4i) der ungeraden Zeilen und der ungeraden Spalten, als "erste Zonen" bezeichnet, gemäß einem ersten Orientierungswinkel (α1, α'1, β1, β'1), die Zonen (3i, 4p) der ungeraden Zeilen und der geraden Spalten, als "zweite Zonen" bezeichnet, gemäß einem zweiten Orientierungswinkel (α2, α'2, β2, β'2), die Zonen (3p-4i) der geraden Zeilen und der ungeraden Spalten, als "dritte Zonen" bezeichnet, gemäß einem dritten Orientierungswinkel (α3, α'3, β3, β'3) und die Zonen (3p-4p) der geraden Zeilen und der geraden Spalten, als "vierte Zonen" bezeichnet, gemäß einem vierten Orientierungswinkel (α4, α'4, β4, β'4) überstrichen werden, wobei diese vier Orientierungswinkel in Bezug auf ein trigonometrisches Bezugssystem unterschiedlich sind.

10. Verfahren nach Anspruch 9, **dadurch gekennzeichnet, dass** das Metallteil (2) n übereinanderliegende, aufeinanderfolgende Schichten (C1, C2, Cx, Cx+1, Cy, Cn) beinhaltet, dass die Orientierungswinkel (α1, α2, α3, α4) der Bewegungsvektoren des Laserstrahls (120) jeweils der ersten, zweiten, dritten und vierten Zonen des Kernbereichs (210) einer Schicht (Cx) in Bezug auf die Orientierungswinkel (α'1, α'2, α'3, α'4) der Bewegungsvektoren des Laserstrahls jeweils der ersten, zweiten, dritten und vierten Zonen des Kernbereichs (210) der darüber befindlichen Schicht (Cx+1) eine Winkeländerung aufweisen, dass die Orientierungswinkel (β1, β2, β3, β4) der Bewegungsvektoren des Laserstrahls jeweils der ersten, zweiten, dritten und vierten Zonen des Hüllenbereichs (220) einer Schicht (Cx) in Bezug auf die Orientierungswinkel (β'1, β'2, β'3, β'4) der Bewegungsvektoren des Laserstrahls jeweils der ersten, zweiten, dritten und vierten Zonen des Hüllenbereichs (220) der darüber befindlichen Schicht (Cx+1) eine Winkeländerung aufweisen und dass diese zwei Winkeländerungen unterschiedlich sind.

11. Verfahren nach einem der Ansprüche 8 bis 10, **dadurch gekennzeichnet, dass** der Kern (21) des Teils (2) n übereinanderliegende, aufeinanderfolgende Schichten (C1, C2, Cx, Cy, Cn) beinhaltet und dass die quadratischen Kernzonen einer Schicht um 1/q Schritt (P), wobei q eine ganze Zahl, vorzugsweise gleich 2, ist, seitlich und/oder längs in Bezug auf die quadratischen Kernzonen der direkt darüber befindlichen Schicht versetzt sind.

12. Verfahren nach einem der Ansprüche 8 bis 11, **dadurch gekennzeichnet, dass** die Hülle (22) des Teils (2) n übereinanderliegende, aufeinanderfolgende Schichten (C1, C2, Cx, Cy, Cn) beinhaltet und dass die quadratischen Hüllenzonen einer Schicht um 1/q Schritt (P), wobei q eine ganze Zahl, vorzugsweise gleich 2, ist, seitlich und/oder längs in Bezug auf die quadratischen Hüllenzonen der direkt darüber befindlichen Schicht versetzt sind.

## Claims

1. Process for the additive manufacturing of a three-dimensional metal part (2) of a thin blade for forming furrows in the tread of a tyre, said thin blade being intended to be inserted into a curing mould of said tyre, having at least a monolithic part and having large variations in thickness, comprising an inner part (21), referred to as a "core", surrounded by an outer part (22), referred to as a "shell", this process consisting in successively solidifying successively deposited layers of metal powder (C1, C2, Cx, Cy, Cn) by melting with the aid of a laser beam (120), and in defining in each of these different successive layers of powder either at least one shell region (220), which constitutes a portion of said shell (22) of the metal part to be manufactured, or at least one core region (210), surrounded by a shell region (220), said core region (210) constituting a portion of said core (21) of the metal part to be manufactured, **characterized in that** the melting of said core regions (210) is effected by scanning with said laser beam (120) so as to form longitudinal weld beads (211) that have identical widths (L), are mutually parallel and that are either juxtaposed or spaced apart from one another by a distance (L2) less than X% of their width (L), or overlap over a distance (L1) less than X% of their width (L), and **in that** the melting of said shell regions (220) is effected by scanning with said laser beam (120) so as to form longitudinal weld beads (221) that have identical widths (L) and an identical width to the weld beads (211) of the core, are mutually parallel and that overlap over a distance (L3) greater than X% of their width (L), X being equal to 30.

2. Process according to Claim 1, **characterized in that** the melting of said core regions (210) is effected by scanning with said laser beam (120) so as to form adjacent weld beads (211) that are spaced apart from one another by a distance (L2) less than 20%, preferably less than 10%, of the width (L) of these beads.

3. Process according to Claim 1, **characterized in that** the melting of said core regions (210) is effected by scanning with said laser beam (120) so as to form weld beads (211) that overlap over a distance (L1) less than 20%, preferably less than 10%, of the width (L) of these weld beads (211).

4. Process according to one of Claims 1 to 3, **characterized in that** the melting of said shell regions (220) is effected by scanning with said laser beam (120) so as to form weld beads (221) that overlap over a distance (L3) greater than 30% and less than or equal to 60%, preferably greater than or equal to 40% and less than or equal to 50% of the width (L) of these beads (211).

5. Process according to one of the preceding claims, **characterized in that** the core (21) and the shell (22) overlap over a width of between 0.01 mm and 0.40 mm, preferably over a width of 0.10 mm.

6. Process according to one of the preceding claims, **characterized in that** at least one core region (210) of a layer of metal powder (C1, C2, Cx, Cy, Cn) comprises at least two zones (3i-4i, 3i-4p, 3p-4i, 3p-4p), and **in that**, among these zones, the scanning of at least one given zone with said laser beam (120) is effected such that the displacement vectors (121) of said laser beam (120) have an orientation angle with respect to a trigonometric coordinate system that is different from the orientation angle of the displacement vectors (121) of said laser beam (120) in a zone contiguous with said given zone.

7. Process according to one of the preceding claims, **characterized in that** at least one shell region (220) of a layer of metal powder (C1, C2, Cx, Cy, Cn) comprises at least two zones (3i-4i, 3i-4p, 3p-4i, 3p-4p), and **in that**, among these zones, the scanning of at least one given zone with said laser beam (120) is effected such that the displacement vectors (121) of said laser beam (120) have an orientation angle with respect to a trigonometric coordinate system that is different from the orientation angle of the displacement vectors (121) of said laser beam (120) in a zone contiguous with said given zone.

8. Process according to Claim 6 or 7, **characterized in that** said zones (3i-4i, 3i-4p, 3p-4i, 3p-4p) are square and disposed in the form of a chequerboard, this chequerboard comprising at least two rows referred to as "even" and "odd".

9. Process according to Claim 8, **characterized in that**, in each core region (210) and/or in each shell region (220), the melting of a given layer of metal powder (C1, C2, Cx, Cy, Cn) is effected by scanning, with the aid of said laser beam (120), the zones (3i, 4i) of the odd rows and of the odd columns, referred to as "first zones", at a first orientation angle (α1, α'1, β1, β'1), the zones (3i, 4p) of the odd rows and of the even columns, referred to as "second zones", at a second orientation angle (α2, α'2, β2, β'2), the zones (3p-4i) of the even rows and of the odd columns, referred to as "third zones", at a third orientation angle (α3, α'3, β3, β'3), and the zones (3p-4p) of the even rows and of the even columns, referred to as "fourth zones", at a fourth orientation angle (α4, α'4, β4, β'4), these four orientation angles with respect to a trigonometric coordinate system being different.

10. Process according to Claim 9, **characterized in that** the metal part (2) comprises n successive superposed layers (C1, C2, Cx, Cx+1, Cy, Cn), **in that** the orientation angles (α1, α2, α3, α4) of the displacement vectors of the laser beam (120) in the first, second, third and fourth zones, respectively, of the core region (210) of one layer (Cx) exhibit an angular variation with the orientation angles (α'1, α'2, α'3, α'4) of the displacement vectors of the laser beam in the first, second, third and fourth zones, respectively, of the core region (210) of the layer (Cx+1) situated thereabove, **in that** the orientation angles (β1, β2, β3, β4) of the displacement vectors of the laser beam in the first, second, third and fourth zones, respectively, of the shell region (220) of one layer (Cx) exhibit an angular variation with the orientation angles (β'1, β'2, β'3, β'4) of the displacement vectors of the laser beam in the first, second, third and fourth zones, respectively, of the shell region (220) of the layer (Cx+1) situated thereabove, and **in that** these two angular variations are different.

11. Process according to one of Claims 8 to 10, **characterized in that** the core (21) of the part (2) comprises n successive superposed layers (C1, C2, Cx, Cy, Cn), and **in that** the square core zones of one layer are offset by 1/q step (P), q being an integer, preferably equal to 2, laterally and/or longitudinally with respect to the square core zones of the layer situated immediately thereabove.

12. Process according to one of Claims 8 to 11, **characterized in that** the shell (22) of the part (2) comprises n successive superposed layers (C1, C2, Cx, Cy, Cn), and **in that** the square shell zones of one layer are offset by 1/q step (P), q being an integer, preferably equal to 2, laterally and/or longitudinally with respect to the square shell zones of the layer situated immediately thereabove.
